# DEMANDE DE BREVET EUROPEEN

(11) **EP 2 131 318 A1**
(43) Date de publication de la demande: **09.12.2009**
(21) Numéro de dépôt: 09161387.7
(22) Date de dépôt: 28.05.2009
(51) Int. Cl.: G06Q 20/00, G07F 7/08

(54) **Procédés et dispositif pour entités électroniques pour l'échange et l'utilisation de droits**

(30) Priorité: 06.06.2008 FR 0853798
(71) Demandeur: OBERTHUR TECHNOLOGIES, 92300 Levallois-Perret (FR)
(72) Inventeur: Bertin, Marc, 78720 La Celle les Bordes (FR)
(74) Mandataire: Imbert de Tremiolles, Ghislain

(57) **Abrégé**

L'invention a pour objet un procédé de transfert d'une donnée représentative d'un droit entre deux entités électroniques (100-1, 100-2, 500), au moins l'une desdites entités électroniques comprenant des moyens de communication sans fil à faible portée (115, 530) adaptés à transmettre ladite donnée pour utiliser ledit droit, lesdites entités électroniques étant adaptées à communiquer directement ou indirectement à travers une interface de communication à longue portée. Le procédé comprend des étapes de transmission et de réception de ladite donnée par lesdites entités électroniques, ladite donnée étant transmise via ladite interface de communication à longue portée, d'authentification et de mémorisation de ladite donnée dans l'entité électronique l'ayant reçue.

## Description

La présente invention concerne l'échange de droits, par exemple de valeurs monétaires, de points de fidélité, de bons d'achat ou d'abonnements et/ou de droits sur un contenu multimédia, et plus particulièrement des procédés et un dispositif pour entités électroniques, de préférence portables, pour l'échange et l'utilisation de tels droits.

L'évolution des réseaux de communication, notamment Internet, a contribué au développement de nouveaux modes de distribution de biens et de services qui ont eux-mêmes entraîné la mise en oeuvre de nouveaux moyens de paiement. Par exemple, le paiement à travers un réseau de communication, aussi appelé paiement en ligne, permet à un utilisateur, après avoir commandé un article ou un service, de fournir des informations bancaires, un montant et une autorisation à un tiers de confiance afin que celui-ci transmette une requête de transaction auprès du système informatique de l'établissement bancaire concerné.

Cependant, si les moyens de paiement entre plusieurs sociétés ou entre des individus et des sociétés ont été à l'origine de nombreux développements, peu de systèmes permettent un échange de droits ou de montants en valeurs, simple et sécurisé, entre plusieurs individus.

Il existe d'une part des porte-monnaie électroniques permettant à un débiteur de verser une somme monétaire à un créditeur, le débiteur et le créditeur étant physiquement proches l'un de l'autre au moment de la transaction. Selon ces systèmes, une carte de paiement est capable de mémoriser un nombre représentant un montant monétaire. Cette carte peut être créditée, ou rechargée, à l'aide d'un dispositif adapté. Elle est débitée lors de chaque paiement. Ce mode de paiement ne met généralement pas en oeuvre de mécanisme de vérification du consentement du titulaire de la carte par son authentification, il s'agit souvent d'un mode de paiement anonyme, comme un paiement en espèce. Cependant, un tel moyen de paiement ne peut être utilisé que pour de petites transactions. Par ailleurs, le créditeur doit disposer d'un dispositif adapté à la lecture de la carte, par contact ou sans contact, pour recevoir l'argent.

Il existe d'autre part des systèmes, tels que le système présenté dans la demande de brevet WO 03/023574, permettant à un débiteur de verser, à partir de l'un de ses comptes, une somme monétaire sur un compte d'un créditeur, le débiteur et le créditeur n'étant pas nécessairement à proximité l'un de l'autre au moment de la transaction. Ainsi, un transfert monétaire peut être effectué entre deux individus pourvus d'entités électroniques telles que des téléphones mobiles. Les transactions sont ici réalisées par l'intermédiaire d'un système central dans lequel sont mémorisés les comptes des utilisateurs et leurs profils. De tels profils permettent de mémoriser les informations bancaires des utilisateurs et d'effectuer les contrôles nécessaires. Une telle solution impose la saisie de l'identité du créditeur et la gestion centralisé des comptes des utilisateurs.

L'invention permet de résoudre au moins un des problèmes exposés précédemment.

L'invention a ainsi pour objet un procédé de transfert d'au moins une donnée représentative d'au moins un droit entre deux entités électroniques, au moins l'une desdites entités électroniques comprenant des moyens de communication sans fil à faible portée adaptés à transmettre ladite au moins une donnée pour utiliser ledit au moins un droit, lesdites entités électroniques étant adaptées à communiquer directement ou indirectement à travers une interface de communication à longue portée, le procédé comprenant les étapes suivantes,
- réception de ladite au moins une donnée par l'une desdites entités électroniques, ladite au moins une donnée étant reçue de l'autre desdites entités électroniques, ladite au moins une donnée étant transmise via ladite interface de communication à longue portée ;
- authentification de ladite au moins une donnée par ladite une desdites entités électroniques ; et,
- mémorisation de ladite au moins une donnée dans ladite une desdites entités électroniques.

Le procédé selon l'invention permet ainsi le transfert de droits entre entités électroniques, à distance, sans nécessité l'intervention d'un tiers, notamment d'un gestionnaire de compte du type compte bancaire, à l'aide de différentes technologies de communication telles que les courriers électroniques, les SMS (sigle de *Short Message Service* en terminologie anglo-saxonne) et les MMS (sigle de *Multimedia Messaging Service* en terminologie anglo-saxonne).

Avantageusement, le procédé comprend en outre une étape d'utilisation dudit au moins un droit représenté par ladite au moins une donnée mettant en oeuvre lesdits moyens de communication sans fil à faible portée.

Selon un mode de réalisation particulier, ladite étape de réception de ladite au moins une donnée comprend une étape de réception de ladite au moins une donnée d'un dispositif électronique distinct desdites entités électroniques mettant en oeuvre lesdits moyens de communication sans fil à faible portée. Le transfert de droit est ainsi réalisé de façon simple via un dispositif électronique en utilisant des moyens de celui-ci.

Toujours selon un mode de réalisation particulier, ladite étape de réception comprend une étape de réception d'une application adaptée à traiter ladite au moins une donnée reçue. Il n'est ainsi pas nécessaire de disposer d'une application particulière pour traiter une transaction.

L'invention a également pour objet un procédé de transfert d'au moins une donnée représentative d'au moins un droit entre deux entités électroniques, au moins l'une desdites entités électroniques comprenant des moyens de communication sans fil à faible portée adaptés à transmettre ladite au moins une donnée pour utiliser ledit au moins un droit, lesdites entités électroniques étant adaptées à communiquer directement ou indirectement à travers une interface de communication à longue portée, le procédé comprenant les étapes suivantes,
- signature de ladite au moins une donnée par l'une desdites entités électroniques ; et,
- transmission de ladite au moins une donnée signée à l'autre desdites entités électroniques, ladite au moins une donnée signée étant transmise via ladite interface de communication à longue portée.

Le procédé selon l'invention permet ainsi le transfert de droits entre entités électroniques, à distance, sans nécessité l'intervention d'un tiers, notamment d'un gestionnaire de compte du type compte bancaire, à l'aide de différentes technologies de communication telles que les courriers électroniques et les SMS.

Selon un mode de réalisation particulier, ladite étape de signature comprend une étape de sélection d'une clé cryptographique mémorisée dans ladite une desdites entités électroniques pour signer ladite au moins une donnée. Le procédé selon l'invention permet ainsi de gérer plusieurs clés cryptographiques permettant de transférer des droits avec plusieurs entités électroniques.

De façon avantageuse, le procédé comprend en outre une étape de chiffrement de ladite au moins une donnée afin de sécuriser le transfert de droit.

Selon un mode de réalisation particulier, ladite étape de transmission de ladite au moins une donnée signée à l'autre desdites entités électroniques comprend une étape de transmission de ladite au moins une donnée signée à un dispositif électronique distinct desdites entités électroniques mettant en oeuvre lesdits moyens de communication sans fil à faible portée. Le transfert de droit est ainsi réalisé de façon simple via un dispositif électronique en utilisant des moyens de celui-ci.

Toujours selon un mode de réalisation particulier, ladite au moins une donnée est transmise dans un message de type message électronique, SMS ou MMS.

L'invention a également pour objet un programme d'ordinateur comprenant des instructions adaptées à la mise en oeuvre de chacune des étapes du procédé décrit précédemment.

L'invention a aussi pour objet un dispositif de transfert d'au moins une donnée représentative d'au moins un droit entre deux entités électroniques, le dispositif comprenant les moyens suivants,
- moyens de communication à faible portée adaptés à transmettre ladite au moins une donnée pour utiliser ledit au moins un droit ;
- moyens de communication adaptés à transmettre ladite au moins une donnée entre lesdites entités électroniques via des moyens de communication à longue portée ;
- moyens de stockage adaptés à mémoriser ladite au moins une donnée ; et,
- moyens de traitement adaptés à recevoir ou à transmettre ladite au moins une donnée et à utiliser ledit au moins un droit associé à ladite au moins une donnée.

Le dispositif selon l'invention permet ainsi de transférer des droits entre entités électroniques, à distance, sans nécessité l'intervention d'un tiers, notamment d'un gestionnaire de compte du type compte bancaire, à l'aide de différentes technologies de communication telles que les courriers électroniques et les SMS.

De façon avantageuse, lesdits moyens de traitement comprennent des moyens cryptographiques adaptés à signer, chiffrer, authentifier et/ou déchiffrer ladite au moins une donnée pour sécuriser le transfert de droits.

De façon avantageuse, lesdits moyens de stockage sont adaptés à mémoriser une application pour traiter ladite au moins une donnée.

Selon un mode de réalisation particulier, lesdits moyens de communication à faible portée sont adaptés à transmettre ladite au moins une donnée entre lesdits moyens de stockage et lesdits moyens de communication à longue portée. Il est ainsi possible d'utiliser aisément les moyens de communication d'un dispositif électronique.

Toujours selon un mode de réalisation particulier, lesdits moyens de communication à faible portée sont conformes à la norme NFC.

Toujours selon un mode de réalisation particulier, lesdits moyens de communication à longue portée sont au moins partiellement de type téléphonie mobile et/ou comprennent une interface réseau de type Internet.

D'autres avantages, buts et caractéristiques de la présente invention ressortent de la description détaillée qui suit, faite à titre d'exemple non limitatif, au regard des dessins annexés dans lesquels :
- la figure 1 représente schématiquement un premier exemple d'entité électronique portable permettant la mise en oeuvre de l'invention ;
- la figure 2 illustre un exemple de dispositif électronique adapté à transmettre des données représentatives de droits entre plusieurs entités électroniques portables telles que celle représentée sur la figure 1 ;
- la figure 3 illustre schématiquement un système adapté au transfert de données représentatives de droits entre deux entités électroniques portables telles que celle illustrée sur la figure 1 à l'aide de deux dispositifs électroniques tels que celui représenté sur la figure 2 ;
- la figure 4 illustre un exemple d'algorithme pouvant être utilisé pour mettre en oeuvre l'invention dans le système illustré sur la figure 3 ; et,
- la figure 5 illustre un second exemple d'entité électronique portable adaptée à mettre en oeuvre de l'invention.

L'invention permet à un débiteur muni d'une entité électronique de transmettre un droit ou un montant en valeurs, stocké dans cette entité électronique, à un créditeur également muni d'une entité électronique.

L'entité électronique du créditeur est ici pourvue de moyens de communication sans fil à faible portée autorisant, par exemple, une communication à une distance maximale d'un mètre, de cinquante centimètres ou de vingt centimètres. Ces moyens de communication sans fil à courte portée sont avantageusement conformes à la norme ISO 14443 ou à la norme NFC (sigle de *Near Field Communication* en terminologie anglo-saxonne).

L'entité électronique du créditeur comprend en outre des moyens permettant d'utiliser un droit ou un montant en valeurs stocké dans une mémoire de l'entité électronique pour accéder à un service ou à un contenu multimédia par l'intermédiaire de ces moyens de communication sans fil à faible portée.

L'entité électronique du débiteur est avantageusement similaire à celle du créditeur et comprend ainsi, de préférence, ces moyens de communication sans fil à faible portée et ces moyens permettant d'utiliser un droit ou un montant en valeurs.

Les entités électroniques sont préférentiellement portables ou de poche. Il s'agit, par exemple, d'un téléphone mobile, d'un assistant personnel aussi appelé PDA (sigle de *Personal Digital Assistant* en terminologie anglo-saxonne), d'une clé USB (sigle de *Universal Serial Bus* en terminologie anglo-saxonne), ou d'une carte à microcircuit, notamment d'une carte conforme à la norme ISO 7816.

Selon un mode de réalisation particulier, l'entité électronique du débiteur est également pourvue de moyens de communication sans fil à faible portée. Les entités électroniques du débiteur et du créditeur sont ainsi capables de se connecter chacune à un dispositif électronique comprenant également des moyens de communication sans fil à faible portée.

Les dispositifs électroniques sont ici pourvus de moyens de communication à longue portée, de préférence sans fil, autorisant, par exemple, une communication à une distance supérieure à cent mètres ou à un kilomètre, pour permettre l'échange de droits ou de montants en valeurs entre les entités électroniques.

De tels moyens de communication sont par exemple des moyens de communications téléphoniques, notamment GSM (sigle de *Global System for Mobile Communications* en terminologie anglo-saxonne) ou GPRS (sigle de *General Packet Radio Service* en terminologie anglo-saxonne). Alternativement, ces moyens de communication permettent d'accéder à un réseau de communication de données tel qu'Internet. De tels moyens de communication sont, à titre d'illustration, compatibles avec au moins l'une des normes WiFi ou Ethernet.

Alternativement, au moins l'une des entités électroniques du débiteur ou du créditeur comprend de tels moyens de communication à longue portée de telle sorte qu'il n'est pas nécessaire de connecter cette entité électronique à un dispositif électronique pour échanger des droits ou des montants en valeurs entre les entités électroniques.

Les droits et les montants en valeurs sont, par exemple, des droits d'accès à des services, notamment de cinéma, de musée, de piscine ou de parc d'attraction, des abonnements d'accès à un service tels que des abonnements de transport et de télécommunication, des unités de paiement telles que celle contenues dans un porte-monnaie électronique, des point de fidélité ou des droit d'accès à un contenu multimédia.

Le droit peut également consister en une clé cryptographique ou une instruction de modification d'un droit associé à une entité électronique.

Le droit ou le montant en valeurs se présente sous la forme d'une information mémorisée dans une mémoire de l'entité électronique.

Lorsqu'il s'agit d'un droit d'accès à un service, l'entité électronique utilise le droit pour donner accès au service, par exemple, en s'authentifiant. L'entité électronique donne ainsi une autorisation. A ces fins, l'entité électronique dispose d'une clé cryptographique permettant l'authentification. L'entité électronique peut également disposer de moyens de mémorisation d'unités de droit. Elle peut alors supprimer ou décrémenter les droits au fur et à mesure de leur épuisement, par exemple par leur utilisation, et permettre également le rechargement de ces droits par une entité autorisée et, de préférence, authentifiée par des moyens cryptographiques. Les droits peuvent ainsi être des unités monétaires, des places de cinéma, un abonnement (sans unité) de transport ou des unités téléphoniques. Lorsqu'il n'y plus de droit, l'entité électronique ne donne plus d'autorisation.

Il peut en être de même lorsque le droit est un droit de restitution d'un contenu numérique, par exemple pour la restitution du film vidéo sur un écran vidéo, typiquement de divertissement. Le contenu numérique est par exemple mémorisé dans l'entité électronique ou dans une station hôte. L'entité électronique peut mémoriser, dans ce cas également, une clé cryptographique et/ou des unités de droit.

Le droit peut également être le contenu lui-même.

Dans tous les cas, l'autorisation ou l'authentification de l'entité électronique pour l'utilisation du droit est réalisée selon l'invention par les moyens de communication sans fil courte portée.

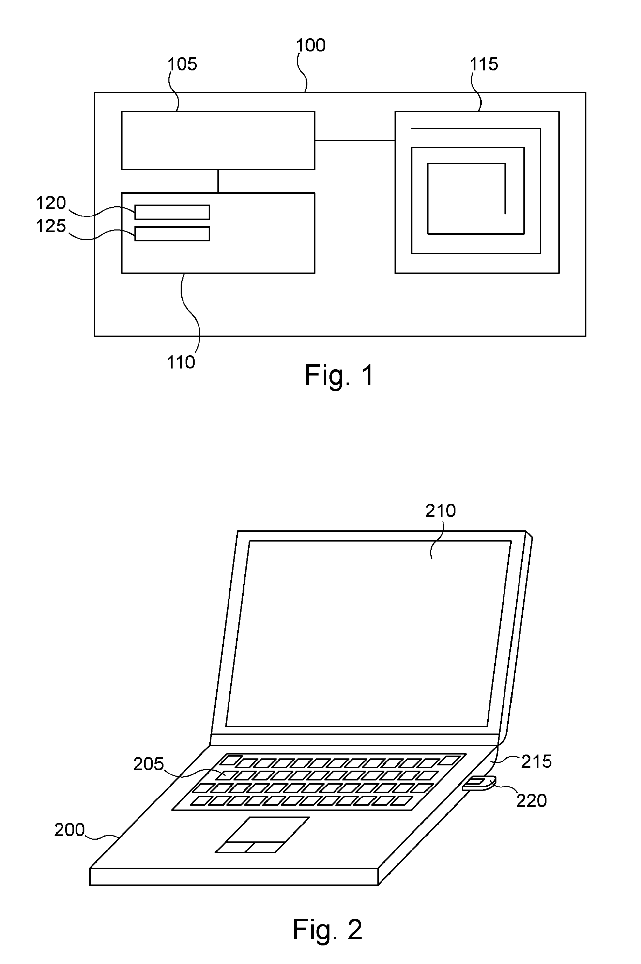

La figure 1 représente schématiquement un premier exemple d'entité électronique permettant la mise en oeuvre de l'invention, par exemple une entité électronique portable de type carte à microcircuit. Comme illustré, l'entité électronique portable 100 comprend ici une unité centrale de traitement 105, aussi appelée CPU (sigle de *Central Processing Unit* en terminologie anglo-saxonne), une mémoire 110, de préférence non volatile, par exemple une mémoire de type EPROM (acronyme *d'Erasable Programmable Read-Only Memory* en terminologie anglo-saxonne) et une antenne 115 permettant l'échange de données selon un mode de communication sans fil à faible portée.

La mémoire 110 est notamment adaptée à mémoriser une ou plusieurs données 120 représentatives de droits et une ou plusieurs clés cryptographiques 125.

La mémoire 110 est également adaptée à mémoriser une application pouvant être utilisée par l'entité électronique pour effectuer, au moins partiellement, une transaction portant sur un droit et pour permettre l'utilisation de ce droit.

Selon un mode de réalisation particulier, la mémoire 110 permet de mémoriser une autre application pouvant être transmise à un dispositif électronique auquel est connecté l'entité électronique et utilisée par celui-ci pour effectuer, au moins partiellement, une transaction portant sur un droit.

L'unité centrale de traitement 105 comprend des moyens cryptographiques adaptés à signer les données 120 représentatives de droits lorsque ces droits sont transmis, ou une partie de ceux, à l'aide d'une clé cryptographique 125. De tels moyens peuvent être logiciels ou matériels. De même, les moyens cryptographiques de l'unité centrale de traitement 105 sont, de préférence, adaptés à authentifier une donnée reçue représentative d'un droit à partir d'une clé cryptographique 125.

La figure 2 illustre un dispositif électronique adapté à communiquer avec l'entité électronique représentée sur la figure 1. Le dispositif électronique représenté est ici un ordinateur portable 200 de type PC (sigle de *Personal Computer* en terminologie anglo-saxonne). Il comprend des moyens de saisie 205, par exemple un clavier et un pavé tactile, un écran de visualisation 210 et une interface de communication à longue portée 215. L'interface 215 est, par exemple, de type Ethernet ou WiFi.

Le dispositif électronique 200 comprend également des moyens de communication à faible portée lui permettant d'échanger des données avec l'entité électronique 100 représentée sur la figure 1. Le dispositif électronique 200 comprend ici un connecteur de type USB auquel est relié une clé USB 220 comprenant de tels moyens de communication sans fil à faible portée. Ainsi, selon cet exemple, les données échangées entre le dispositif électronique 200 et l'entité électronique 100 transitent via la clé USB 220. Alternativement, les moyens de communication sans fil à faible portée peuvent être directement intégrés dans le dispositif électronique 200.

Le dispositif électronique 200 peut être utilisé pour échanger des données représentatives de droits entre deux entités électroniques ou pour utiliser de tels droits, notamment pour accéder à des services. Par exemple, le dispositif électronique 200 peut être relié à un portillon automatique dont l'ouverture est conditionnée par un droit dont la donnée représentative est contenue dans une entité électronique, la donnée représentative de ce droit étant transmise selon un mode de communication sans fil à faible portée.

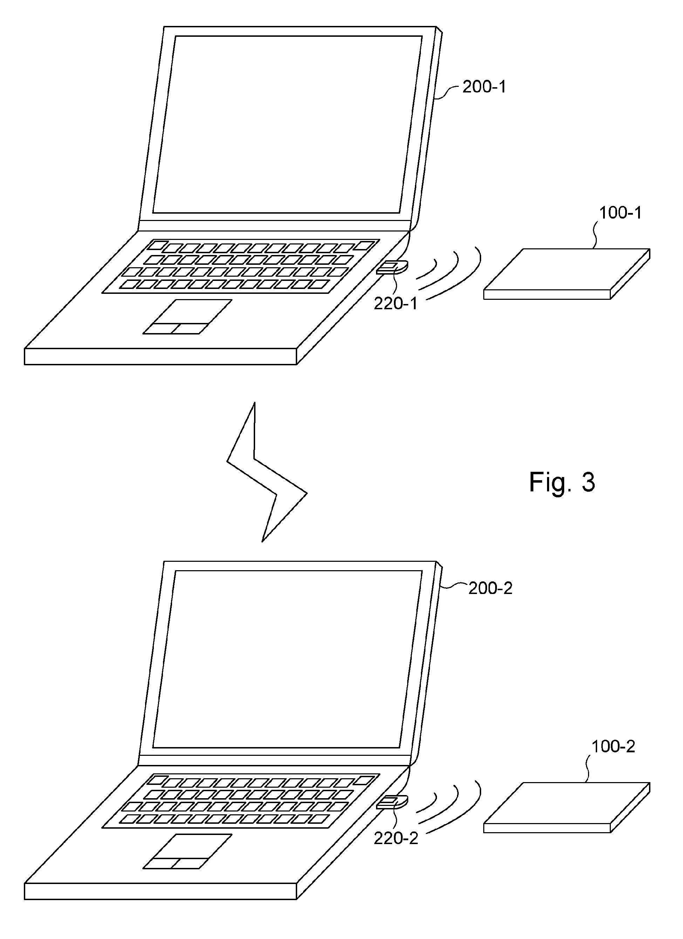

La figure 3 illustre un exemple de mise en oeuvre de l'invention pour échanger des données représentatives de droits entre deux entités électroniques portables telles que celle illustrée sur la figure 1 à l'aide de deux dispositifs tels que celui représenté sur la figure 2.

Comme illustré, les entités électroniques 100-1 et 100-2 sont adaptées à se connecter aux dispositifs 200-1 et 200-2 via les clés USB 220-1 et 220-2, respectivement, pour permettre l'échange de données entre l'entité électronique 100-1 et le dispositif électronique 200-1 et entre l'entité électronique 100-2 et le dispositif électronique 200-2.

Par ailleurs, les dispositifs électroniques 200-1 et 200-2 sont reliés entre eux par leur interface de communication à longue portée (référence 215 sur la figure 2) à travers, par exemple, le réseau Internet.

Ainsi, il est possible de transférer des données, notamment des données représentatives de droits, de l'entité électronique 100-1 vers l'entité électronique 100-2 et réciproquement.

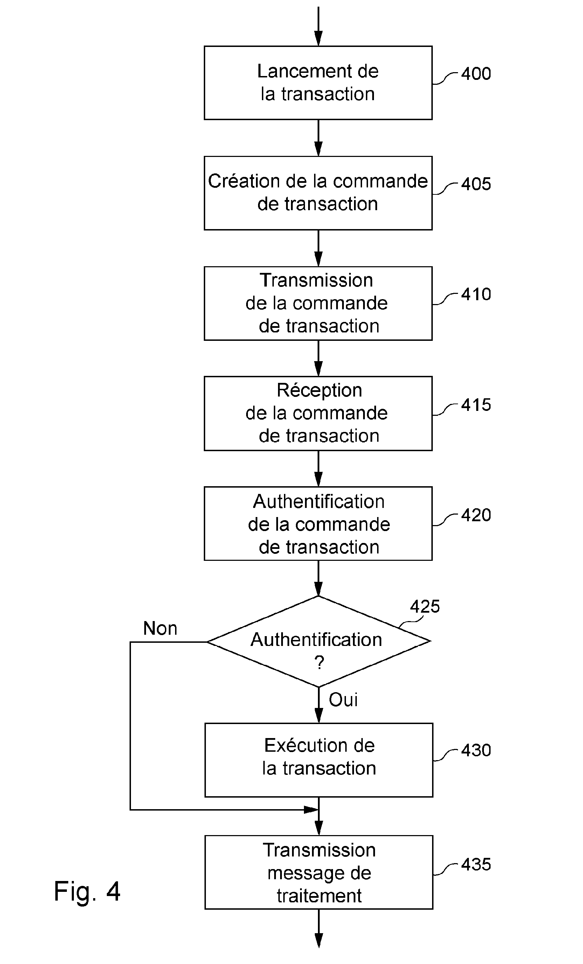

La figure 4 illustre un exemple d'algorithme pouvant être utilisé pour mettre en oeuvre l'invention dans le système illustré sur la figure 3.

Pour simplifier la description, il est ici considéré que le possesseur de l'entité électronique 100-1 est le débiteur d'un droit et que le possesseur de l'entité électronique 100-2 est le créditeur de ce droit.

Pour lancer la transaction (étape 400), le débiteur utilise le dispositif électronique 200-1. Il place son entité électronique 100-1 à proximité de la clé USB 220-1 pour permettre l'échange de données entre ces deux systèmes selon un mécanisme de communication standard, par exemple conforme à la norme NFC.

Une application de gestion de transaction est lancée sur le dispositif électronique 200-1, avant ou après avoir placé les systèmes 100-1 et 220-1 à proximité l'un de l'autre. Une telle application peut avoir été préalablement mémorisée dans le dispositif électronique 200-1 ou peut être reçue de l'entité électronique 100-1, automatiquement ou sur requête de l'utilisateur.

Si l'application a été lancée sur le dispositif électronique 200-1 et si l'entité électronique 100-2 n'est pas à proximité de la clé USB 220-2 pour permettre l'échange de données entre ces deux systèmes, un message d'alerte est, de préférence, affiché sur le dispositif électronique 200-1 pour demander au débiteur d'approcher l'entité électronique 100-1 de la clé USB 220-1.

Cette application peut être lancée par l'utilisateur ou lancée de façon automatique lorsque l'entité électronique 100-1 est placée à proximité de la clé USB 220-1, éventuellement après avoir été transférée de l'entité électronique 100-1.

A l'aide de cette application, comportant de préférence une interface graphique, et de moyens de saisie tels que les moyens 205, le débiteur précise, par exemple, le type de transaction, l'identifiant du droit ou d'une partie de droit devant être transféré et l'identité du créditeur. L'identité du créditeur peut notamment être un identifiant quelconque, un numéro de téléphone ou une adresse électronique. L'identité du créditeur doit permettre la transmission d'un message à celui-ci. Certaines de ces informations, en particulier l'identifiant du droit ou d'une partie de droit devant être transféré, sont transmises à l'entité électronique 100-1 qui crée une commande de transaction (étape 405).

L'entité électronique 100-1 chiffre et signe ces informations à l'aide d'une clé, publique (de préférence celle du créditeur) ou privée, préalablement mémorisée et d'un algorithme tel que les algorithmes RSA (sigle basé sur le nom des auteurs de cet algorithme, Rivest, Shamir et Adleman), ECC (sigle d'*Elliptice-curve cryptography* en terminologie anglo-saxonne), AES/DES (sigles d'*Advanced Encryption Standard* et de *Data Encryption Standard* en terminologie anglo-saxonne).

La clé utilisée pour chiffrer et signer les informations peut être liée au créditeur, c'est-à-dire déterminée à partir de son identifiant.

Il convient de remarquer que grâce à cette sécurisation, un opérateur, par exemple un opérateur de télécommunication, une banque ou une administration, peut distribuer de telles entités électroniques et garder le contrôle des droits échangés entre les entités électroniques, la deuxième entité électronique (100-2) vérifiant l'authenticité de l'émetteur de la donnée signée représentative du droit transféré.

Les informations chiffrées et signées formant la commande de transaction sont ensuite transmises au dispositif électronique 200-1, via la clé USB 220-1, pour être insérées dans un message à destination du créditeur. Un tel message peut être, par exemple, un courrier électronique, un SMS (sigle de *Short Message Service* en terminologie anglo-saxonne) ou un MMS (sigle de *Multimedia Messaging Service* en terminologie anglo-saxonne).

L'insertion des informations chiffrées et signées dans le message à destination du créditeur peut être automatiquement réalisée par l'application utilisée par le débiteur pour lancer la transaction ou peut être réalisée par le débiteur lui-même.

Le message peut également comprendre l'application permettant au créditeur de traiter le message reçu pour effectuer la transaction.

Le message comprenant les informations chiffrées et signées est ensuite transmis au créditeur (étape 410).

A la réception du message (étape 415), le dispositif électronique du débiteur (200-2) lance, de préférence automatiquement, l'application permettant de traiter le message reçu pour effectuer la transaction. Cette application peut être préalablement installée sur le dispositif électronique 200-1, mémorisée dans l'entité électronique 100-2 et transmise au dispositif électronique 200-1, sur requête de celui-ci ou de façon automatique lorsque l'entité électronique 100-2 est placée à proximité de la clé USB 220-2, ou transmise avec le message.

Si l'entité électronique 100-2 n'est pas à proximité de la clé USB 220-2 pour permettre l'échange de données entre ces deux systèmes, un message d'alerte est, de préférence, affiché sur le dispositif électronique 200-2 pour demander au créditeur d'approcher l'entité électronique 100-2 de la clé USB 220-2.

Les informations chiffrées et signées sont extraites du message reçu et transmises à l'entité électronique 100-2 où elles sont déchiffrées et où le débiteur est authentifié en vérifiant la signature. Ces opérations de déchiffrement et de vérification de la signature sont réalisées à l'aide d'une clé préalablement mémorisée correspondant à la clé utilisée pour les opérations de chiffrement et de signature.

Si le débiteur est authentifié (étape 425), la transaction est effectuée (étape 430) ; une donnée représentative du droit est créée ou modifiée dans une mémoire de l'entité électronique 100-2 selon les informations reçues pour permettre, ultérieurement, l'utilisation du droit correspondant.

Une information de traitement de la transaction est, de préférence, générée dans l'entité électronique 100-2 pour fournir une indication de l'exécution de la transaction (étape 435). Dans un mode de réalisation particulier, cette information peut correspondre à au moins trois valeurs distinctes pour indiquer que la transaction a été effectuée, que la transaction n'a pas été effectuée mais que le débiteur a été authentifié et que la transaction n'a pas été effectuée et que le débiteur n'a pas été authentifié. Cette information de traitement est avantageusement signée en utilisant la clé publique du débiteur ou une clé privée.

L'information de traitement signée est transmise au dispositif électronique 200-2, via la clé USB 220-1, où elle est insérée dans un message à destination de débiteur. A nouveau, ce message peut être, par exemple, un courrier électronique, un SMS ou un MMS.

Selon un mode de réalisation particulier, lorsqu'une transaction est lancée par un débiteur, la donnée représentative du droit transféré est supprimée de façon conditionnelle de l'entité électronique du débiteur. Ainsi, si ce droit n'est plus disponible pour le débiteur, la donnée représentative de celui-ci n'est réellement supprimée qu'à la réception du message de confirmation de la transaction, de préférence après authentification du créditeur.

Toujours selon un mode de réalisation particulier, après authentification du débiteur, le créditeur transmet le message de transaction à un tiers de confiance qui effectue lui-même la transaction. Le message retransmis par le créditeur peut comprendre des informations relatives au créditeur, par exemple des références d'un compte à créditer. Selon ce mode de réalisation, le droit n'est pas directement échangé entre deux entités électroniques mais transite par un compte géré par un tiers.

Toujours selon un mode de réalisation particulier, le débiteur est invité à entrer un code personnel, par exemple un code PIN (acronyme de *Personal Identification Number* en terminologie anglo-saxonne), lorsqu'il souhaite effectuer une transaction. Ce code, entré sur le dispositif électronique 200-1, est transmis à l'entité électronique 100-1 où il est comparé à un code préalablement mémorisé pour authentifier le débiteur. Si celui-ci n'est pas authentifié, il ne peut pas transférer de droits dont les données représentatives sont contenues dans l'entité électronique 100-1.

Selon un autre mode de réalisation, la transaction est lancée par le créditeur à partir du dispositif électronique 200-2. L'étape 400 consiste alors notamment à saisir les informations nécessaires à la transaction, par exemple, le type de transaction, l'identifiant du droit ou d'une partie de droit devant être transféré et l'identité du débiteur. L'identité du débiteur peut notamment être un identifiant quelconque, un numéro de téléphone ou une adresse électronique. L'identité du débiteur doit permettre la transmission d'un message à celui-ci.

De façon avantageuse, certaines de ces informations, en particulier l'identifiant du droit ou d'une partie de droit devant être transféré, sont transmises à l'entité électronique 100-2 qui chiffre et signe ces informations pour permettre au débiteur d'authentifier le créditeur. Les informations chiffrées et signées sont ensuite retransmises au dispositif électronique 200-2.

Les informations nécessaires à la transaction, éventuellement chiffrées et signées, sont alors transmises au débiteur avec l'identifiant du créditeur. Après une éventuelle authentification du créditeur, le débiteur peut valider la transaction et les étapes 405 à 435 sont effectuées.

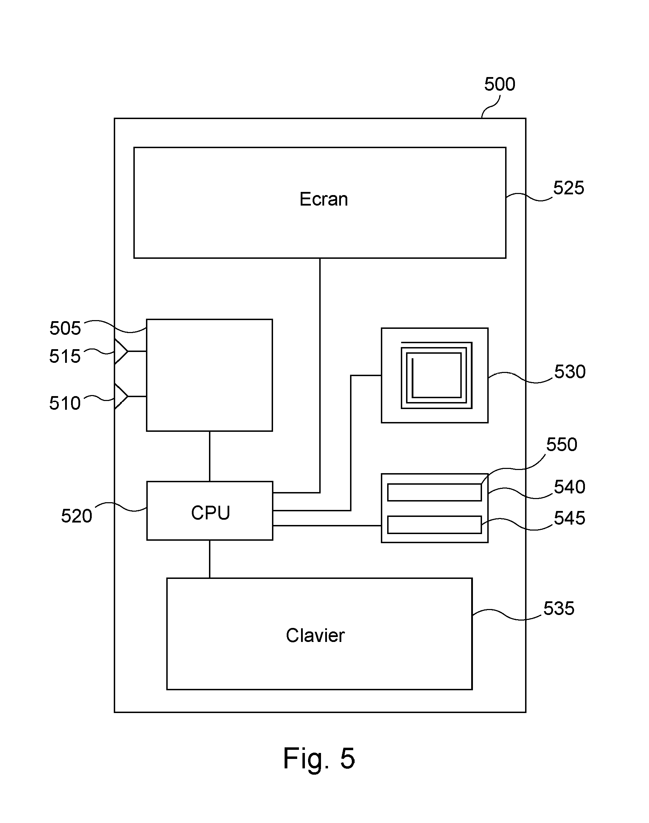

La figure 5 illustre un second exemple d'entité électronique portable adaptée à mettre en oeuvre l'invention, l'entité électronique comprenant elle-même des moyens de communication à longue portée.

Comme représenté, l'entité électronique portable 500 est ici un téléphone mobile qui comprend un module 505 de téléphonie mobile, avantageusement relié à un haut-parleur 510 et à un microphone 515. Le téléphone mobile 500 comprend également une unité centrale de traitement 520, aussi appelée CPU et, de préférence, un écran 525.

Le téléphone mobile 500 comprend en outre un module 530 de communication à faible portée, avantageusement un module de communication sans fil à faible portée. Le module 530 est par exemple du type NFC. Le module 530 peut être directement implanté dans le téléphone mobile 500, par exemple sous forme de circuit intégré et d'antenne, ou inséré dans le téléphone mobile 500, par exemple, sous forme de carte à microcircuit comprenant une antenne intégrée, notamment d'une carte SIM (acronyme de *Subscriber Identity Module* en terminologie anglo-saxonne).

Le téléphone mobile comprend également un dispositif de saisie 535, tel qu'un clavier ou un dispositif équivalent, pour saisir des références de droits, des montants en valeurs et/ou des commandes. Le dispositif de saisie 535 forme, en coopération avec l'écran 525, une interface utilisateur. Le dispositif de saisie 535 peut également être intégré à l'écran 525 sous forme d'écran tactile.

Le téléphone mobile 500 comprend aussi un module mémoire 540 adapté à mémoriser au moins partiellement une application 545 permettant l'échange de droits à l'aide du module de téléphonie mobile 505 et l'utilisation de droits à l'aide du module 530 de communication sans fil à faible portée. L'échange de droit peut également être réalisé à partir d'un module de communication de données (non représenté), par exemple un module WiFi.

Le module mémoire 540 est également adapté à mémoriser des données 550 représentatives de droit ou des montants en valeurs.

Le téléphone mobile 500 comprend ainsi tous les moyens nécessaires à la mise en oeuvre de l'invention. En particulier, le téléphone mobile peut être utilisé pour transférer des droits selon le schéma de la figure 3 et l'algorithme de la figure 4, le téléphone mobile 500 étant utilisé à la place de l'entité électronique 100-1, du dispositif électronique 200-1 et de la clé USB 220-1 ou à la place de l'entité électronique 100-2, du dispositif électronique 200-2 et de la clé USB 220-2.

Naturellement, pour satisfaire des besoins spécifiques, une personne compétente dans le domaine de l'invention pourra appliquer des modifications dans la description précédente.

## Revendications

1. Procédé de transfert d'au moins une donnée représentative d'au moins un droit entre deux entités électroniques portables (100-1, 100-2, 500), au moins l'une desdites entités électroniques portables comprenant des moyens de communication sans fil à faible portée (115, 530) adaptés à transmettre ladite au moins une donnée pour utiliser ledit au moins un droit, lesdites entités électroniques portables étant adaptées à communiquer directement ou indirectement à travers une interface de communication à longue portée, le procédé étant **caractérisé en ce qu'**il comprend les étapes suivantes,
- réception (415) de ladite au moins une donnée par l'une desdites entités électroniques portables, ladite au moins une donnée étant reçue de l'autre desdites entités électroniques portables, ladite au moins une donnée étant transmise via ladite interface de communication à longue portée ;
- authentification (420) de ladite au moins une donnée par ladite une desdites entités électroniques ; et,
- mémorisation (430) de ladite au moins une donnée dans ladite une desdites entités électroniques.

2. Procédé selon la revendication précédente comprenant en outre une étape d'utilisation dudit au moins un droit représenté par ladite au moins une donnée mettant en oeuvre lesdits moyens de communication sans fil à faible portée.

3. Procédé selon la revendication 1 ou la revendication 2 selon lequel ladite étape de réception de ladite au moins une donnée comprend une étape de réception de ladite au moins une donnée d'un dispositif électronique distinct desdites entités électroniques portables mettant en oeuvre lesdits moyens de communication sans fil à faible portée.

4. Procédé selon l'une quelconque des revendications précédentes selon lequel ladite étape de réception comprend une étape de réception d'une application adaptée à traiter ladite au moins une donnée reçue.

5. Procédé de transfert d'au moins une donnée représentative d'au moins un droit entre deux entités électroniques portables (100-1, 100-2, 500), au moins l'une desdites entités électroniques portables comprenant des moyens de communication sans fil à faible portée (115, 530) adaptés à transmettre ladite au moins une donnée pour utiliser ledit au moins un droit, lesdites entités électroniques portables étant adaptées à communiquer directement ou indirectement à travers une interface de communication à longue portée, le procédé étant **caractérisé en ce qu'**il comprend les étapes suivantes,
- signature de ladite au moins une donnée par l'une desdites entités électroniques portables ; et,
- transmission de ladite au moins une donnée signée à l'autre desdites entités électroniques portables, ladite au moins une donnée signée étant transmise via ladite interface de communication à longue portée.

6. Procédé selon la revendication précédente selon lequel ladite étape de signature comprend une étape de sélection d'une clé cryptographique mémorisée dans ladite une desdites entités électroniques pour signer ladite au moins une donnée.

7. Procédé selon la revendication 5 ou la revendication 6 comprenant en outre une étape de chiffrement de ladite au moins une donnée.

8. Procédé selon l'une quelconque des revendications 5 à 7 selon lequel ladite étape de transmission de ladite au moins une donnée signée à l'autre desdites entités électroniques portables comprend une étape de transmission de ladite au moins une donnée signée à un dispositif électronique distinct desdites entités électroniques portables mettant en oeuvre lesdits moyens de communication sans fil à faible portée.

9. Procédé selon l'une quelconque des revendications précédentes selon lequel ladite au moins une donnée est transmise dans un message de type message électronique, SMS ou MMS.

10. Programme d'ordinateur comprenant des instructions adaptées à la mise en oeuvre de chacune des étapes du procédé selon l'une quelconque des revendications précédentes.

11. Dispositif de transfert d'au moins une donnée représentative d'au moins un droit entre deux entités électroniques portables (100-1, 100-2, 500), le dispositif étant **caractérisé en ce qu'**il comprend les moyens suivants,
- moyens de communication à faible portée (115, 530) adaptés à transmettre ladite au moins une donnée pour utiliser ledit au moins un droit ;
- moyens de communication adaptés à transmettre ladite au moins une donnée entre lesdites entités électroniques portables via des moyens de communication à longue portée (215, 505) ;
- moyens de stockage adaptés à mémoriser ladite au moins une donnée ; et,
- moyens de traitement adaptés à recevoir ou à transmettre ladite au moins une donnée et à utiliser ledit au moins un droit associé à ladite au moins une donnée.

12. Dispositif selon la revendication précédente selon lequel lesdits moyens de traitement comprennent des moyens cryptographiques adaptés à signer, chiffrer, authentifier et/ou déchiffrer ladite au moins une donnée.

13. Dispositif selon la revendication 11 ou la revendication 12 selon lequel lesdits moyens de stockage sont adaptés à mémoriser une application pour traiter ladite au moins une donnée.

14. Dispositif selon l'une quelconque des revendications 11 à 13 selon lequel lesdits moyens de communication à faible portée sont adaptés à transmettre ladite au moins une donnée entre lesdits moyens de stockage et lesdits moyens de communication à longue portée.

15. Dispositif selon l'une quelconque des revendications 11 à 14 selon lequel lesdits moyens de communication à faible portée sont conformes à la norme NFC.

16. Dispositif selon l'une quelconque des revendications 11 à 15 selon lequel lesdits moyens de communication à longue portée sont au moins partiellement de type téléphonie mobile et/ou comprennent une interface réseau de type Internet.
